(19) Europäisches Patentamt
European Patent Office
Office européen des brevets

(11) Veröffentlichungsnummer: **0 535 644 A1**

(12) # EUROPÄISCHE PATENTANMELDUNG

(21) Anmeldenummer: **92116757.3**

(51) Int. Cl.5: **C09B 62/513**

(22) Anmeldetag: **30.09.92**

(30) Priorität: **01.10.91 DE 4132616**

(43) Veröffentlichungstag der Anmeldung:
**07.04.93 Patentblatt 93/14**

(84) Benannte Vertragsstaaten:
**BE CH DE ES FR GB IT LI NL PT**

(71) Anmelder: **HOECHST AKTIENGESELLSCHAFT**
**Postfach 80 03 20**
**W-6230 Frankfurt am Main 80(DE)**

(72) Erfinder: **Schläfer, Ludwig, Dr.**
**Königsberger Strasse 40**
**W-6233 Kelkheim/Ts(DE)**
Erfinder: **Russ, Werner Hubert, Dr.**
**Wingertstrasse 8a**
**W-6093 Flörsheim/M(DE)**

(54) **Wasserlösliche Disazoverbindungen, Verfahren zu deren Herstellung und ihre Verwendung als Farbstoffe.**

(57) Disazoverbindungen der nachstehend angegebenen und definierten allgemeinen Formel (1), die sich als faserreaktive Farbstoffe zum Färben von hydroxy- und/oder carbonamidgruppenhaltigem Material, insbesondere Fasermaterial, wie Cellulosefasern, Wolle und synthetische Polyamidfasern, eignen und marineblaue Färbungen in hoher Farbtiefe und guten Echtheitseigenschaften liefern.

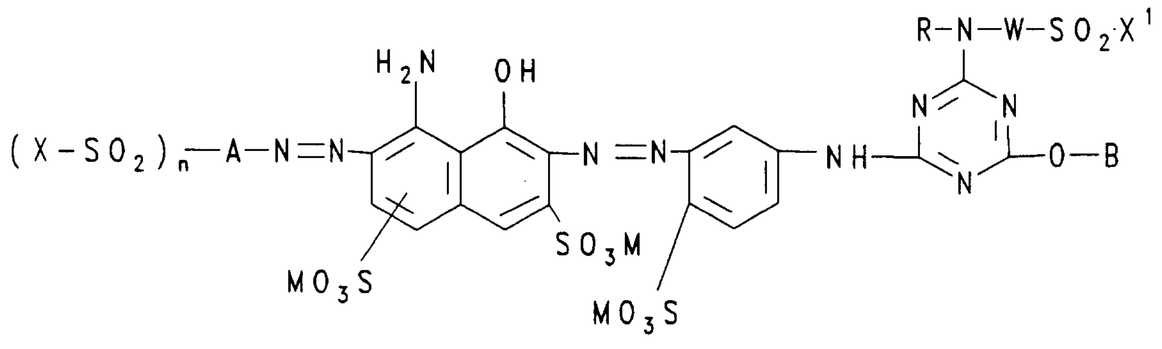

(1)

worin bedeuten:
A ist ein Phenylenrest, der durch in faserreaktiven Farbstoffen übliche Substituenten substituiert sein kann, oder ist ein Naphthylenrest, der durch Sulfo substituiert sein kann, X ist die Vinylgruppe oder ist eine Ethylgruppe, die in β-Stellung durch einen alkalisch eliminierbaren Substituenten substituiert ist, n ist die Zahl 1 oder 2, M ist ein Wasserstoffatom oder ein Alkalimetall, R ist ein Wasserstoffatom oder eine niedere Alkylgruppe, W ist die Phenylengruppe oder eine niedere Alkylengruppe, $X^1$ ist die Vinylgruppe oder ist die Ethylgruppe, die in β-Stellung durch einen alkalisch eliminierbaren Substituenten substituiert sein kann, und B ist eine niedere Alkylgruppe.

EP 0 535 644 A1

Die Erfindung liegt auf dem technischen Gebiet der faserreaktiven Azofarbstoffe.

Einzelne Disazofarbstoffe mit einer bivalenten 1-Amino-8-naphthol-disulfonsäure-Kupplungskomponente, die eine faserreaktive Gruppe der Vinylsulfonreihe besitzen und darüber hinaus einen alkoxysubstituierten s-Triazin-Rest enthalten, sind aus der japanischen Patentanmeldungs-Veröffentlichung Sho-57-57754 und aus der russischen Patentschrift Nr. 295 786 bekannt. Diese Farbstoffe eignen sich weder für den Ätzdruck noch für den Reservedruck.

Mit der vorliegenden Erfindung wurden nunmehr neue, wertvolle faserreaktive Monoazoverbindungen mit guten bis sehr guten Naßechtheitseigenschaften der mit ihnen erhältlichen Färbungen gefunden, die sich sehr gut für den Ätz- und Reservedruck eignen und somit in breiterem Anwendungsumfang zum Färben von Fasermaterialien einsetzen lassen. Beim Ätzdruck wird auf eine gefärbte Stoffbahn (Fond) in einem gewünschten Muster ein Ätzmittel aufgedruckt; das Ätzmittel zerstört den Farbstoff, sofern der Farbstoff ätzbar ist, so daß nach Fertigstellung des Ätzverfahrens ein weißes Muster auf der Färbung erscheint (Weißätze). Enthält die aufgedruckte Ätze zusätzlich einen ätzestabilen Farbstoff, so erhält man nach Fertigstellung des Ätzvorgangs und üblicher Behandlung zur Fixierung dieses beigegebenen Farbstoffes auf dem Fond ein Druckmuster in einem anderen Farbton (Buntätze). Bei dem Reservedruck wird zunächst das Gewebe mit einem geeigneten Reservierungsmittel in einem gewünschten Muster bedruckt. Das so vorbedruckte Gewebe wird anschließend mit einem Farbstoff, der dafür geeignet ist, sich mit dem Reservierungsmittel zu verbinden und somit nicht mehr in der Lage ist, auf dem Gewebe zu fixieren, überfärbt (überklotzt oder überdruckt) mit der Folge, daß an den reservierten Stellen keine Farbstoffixierung eintritt und somit die erhaltene Färbung ein weißes Muster gemäß dem Muster des Reservierungsmittels besitzt.

Die neuen, erfindungsgemäßen Disazoverbindungen besitzen die allgemeinen Formel (1)

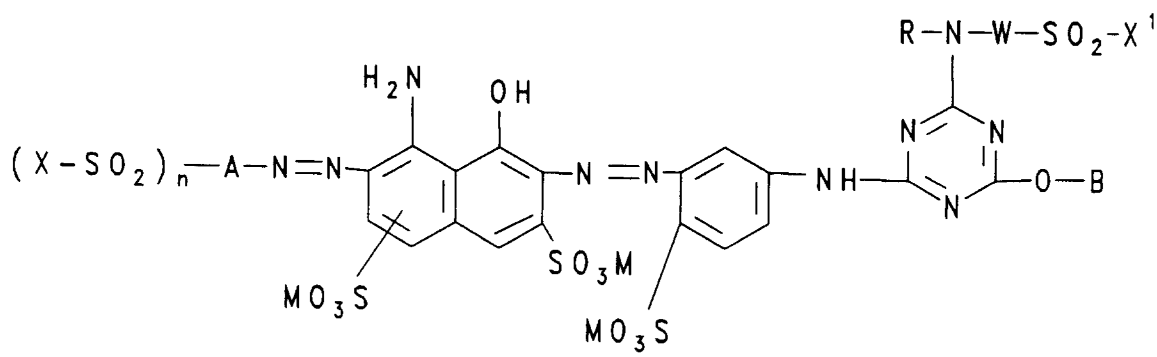

(1)

in welcher bedeuten:

- A ist Phenylen, das durch 1 oder 2 Substituenten substituiert sein kann, wie beispielsweise Substituenten aus der Gruppe Halogen, wie Brom und insbesondere Chlor, Alkyl von 1 bis 4 C-Atomen, wie Ethyl und insbesondere Methyl, Alkoxy von 1 bis 4 C-Atomen, wie Ethoxy und insbesondere Methoxy, Sulfo und Carboxy, wobei der Phenylenrest bevorzugt der meta- oder para-Phenylenrest ist, oder ist ein Naphthylen, an das die Azogruppe bevorzugt in 2-Stellung gebunden ist, das durch ein Sulfo substituiert sein kann;
- X ist Vinyl oder ist Ethyl, das in $\beta$-Stellung durch einen Substituenten substituiert ist, der durch Alkali unter Bildung der Vinylgruppe eliminierbar ist, bevorzugt hiervon $\beta$-Sulfatoethyl;
- n ist die Zahl 1 oder 2, bevorzugt 1;
- M ist Wasserstoff oder ein Alkalimetall, wie Natrium, Kalium oder Lithium;
- R ist Wasserstoff oder Alkyl von 1 bis 4 C-Atomen, wie Ethyl und insbesondere Methyl, bevorzugt Wasserstoff;
- W ist Phenylen oder Alkylen von 2 bis 4 C-Atomen, bevorzugt hiervon 1,3-Phenylen, 1,4-Phenylen, 1,2-Ethylen und 1,3-Propylen;
- $X^1$ ist Vinyl oder ist Ethyl, das in $\beta$-Stellung durch einen Substituenten substituiert ist, der durch Alkali unter Bildung der Vinylgruppe eliminierbar ist, wie hiervon bevorzugt $\beta$-Chlorethyl oder $\beta$-Sulfatoethyl, und ist bevorzugt Vinyl oder $\beta$-Sulfatoethyl;
- B ist Alkyl von 1 bis 4 C-Atomen, wie Ethyl und insbesondere Methyl.

Weiterhin bevorzugt sind hiervon Verbindungen, in welchen A einen Rest der allgemeinen Formel (2a) oder (2b)

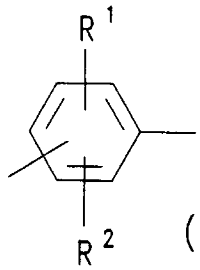
(2a)

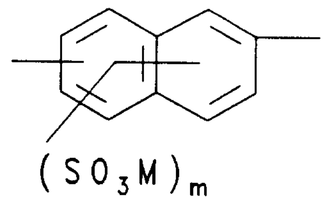
(2b)

ist, worin bedeuten:

- $R^1$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Carboxy, Chlor oder Sulfo, bevorzugt Wasserstoff oder Methoxy;
- $R^2$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy oder Chlor, bevorzugt Wasserstoff oder Methoxy;
- m ist die Zahl Null oder 1, wobei im Falle von m gleich 1 die Gruppe $SO_3M$ bevorzugt in 1-, 6- oder 8-Stellung gebunden ist (im Falle von m gleich Null stellt diese Gruppierung ein Wasserstoffatom dar);

die Gruppe $X\text{-}SO_2$- steht im Formelrest (2b) bevorzugt in 6- oder 8-Stellung des in 2-Stellung mit der Azogruppe verbundenen Naphthylrestes.

β-Ständige, alkalisch eliminierbare Substituenten in der Ethylgruppe von X und $X^1$ sind beispielsweise Alkanoyloxy von 2 bis 5 C-Atomen, wie Acetyloxy, Benzoyloxy, Sulfobenzoyloxy, Toluolsulfonyloxy, Halogen, wie Brom und insbesondere Chlor, Dimethylamino, Diethylamino, Phosphato, Thiosulfato und Sulfato.

Die Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$, Carboxygruppen Gruppen entsprechend der allgemeinen Formel -COOM, Phosphatogruppen Gruppen entsprechend der allgemeinen Formel $-OPO_3M_2$, Thiosulfatogruppen Gruppen entsprechend der allgemeinen Formel $-S\text{-}SO_3M$ und Sulfatogruppen Gruppen entsprechend der allgemeinen Formel $-OSO_3M$, jeweils mit M der obengenannten Bedeutung.

Reste der allgemeinen Formel $(X\text{-}SO_2)_n\text{-}A$- in den Verbindungen der allgemeinen Formel (1) sind beispielsweise 4-(β-Sulfatoethylsulfonyl)-phenyl, 4-Vinylsulfonylphenyl, 3-(β-Sulfatoethylsulfonyl)-phenyl, 2,4-Bis-(β-sulfatoethylsulfonyl)-phenyl, 2,5-Bis-(β-sulfatoethylsulfonyl)-phenyl, 3,4-Bis-(β-sulfatoethylsulfonyl)-phenyl, 3,5-Bis-(β-sulfatoethylsulfonyl)-phenyl, 2-Methoxy-5-(β-sulfatoethylsulfonyl)-phenyl, 4-Methoxy-3-(β-sulfatoethylsulfonyl)-phenyl, 2-Methoxy-4-(β-sulfatoethylsulfonyl)-phenyl, 2-Methoxy-5-methyl-4-(β-sulfatoethylsulfonyl)-phenyl, 2,5-Dimethoxy-4-(β-sulfatoethylsulfonyl)-phenyl, 6-(β-Sulfatoethylsulfonyl)-naphth-2-yl, 8-(β-Sulfatoethylsulfonyl)-naphth-2-yl, 6-Sulfo-8-(β-sulfatoethylsulfonyl)-naphth-2-yl, 8-Sulfo-6-(β-sulfatoethylsulfonyl)-naphth-2-yl und 1-Sulfo-6-(β-sulfatoethylsulfonyl)-2-naphth-yl.

Reste der Formel $-W\text{-}SO_2\text{-}X^1$ in den Verbindungen der allgemeinen Formel (1) sind beispielsweise 4-(β-Sulfatoethylsulfonyl)-phenyl, 3-(β-Sulfatoethylsulfonyl)-phenyl, 4-Vinylsulfonyl-phenyl, 3-Vinylsulfonyl-phenyl, 2-(β-Sulfatoethylsulfonyl)-ethyl, 2-(β-Chlorethylsulfonyl)-ethyl, 2-(Vinylsulfonyl)-ethyl, 3-(Vinylsulfonyl)-propyl, 3-(β-Chlorethylsulfonyl)-propyl, 3-(β-Sulfatoethylsulfonyl)-propyl, 4-(β-Sulfatoethylsulfonyl)-butyl, 4-(β-Chlorethylsulfonyl)-butyl und 4-(Vinylsulfonyl)-butyl.

Die vorliegende Erfindung betrifft weiterhin Verfahren zur Herstellung der erfindungsgemäßen Azoverbindungen der allgemeinen Formel (1), die dadurch gekennzeichnet sind, daß man eine Verbindung der allgemeinen Formel (3)

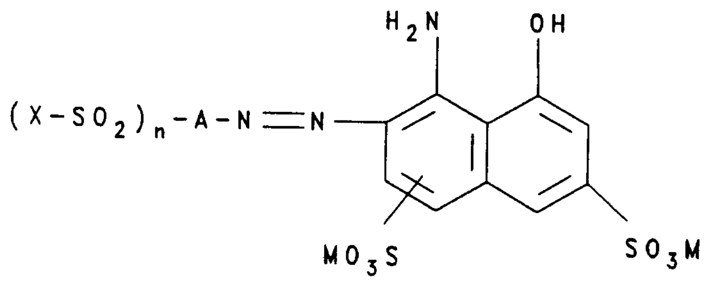

(3)

in welcher M, X, n und A eine der obengenannten Bedeutungen haben und die eine Gruppe $-SO_3M$ in meta- oder para-Stellung zur Aminogruppe an den Naphthalinrest gebunden ist, mit einer Diazoniumsalzverbindung eines aromatischen Amins der allgemeinen Formel (4)

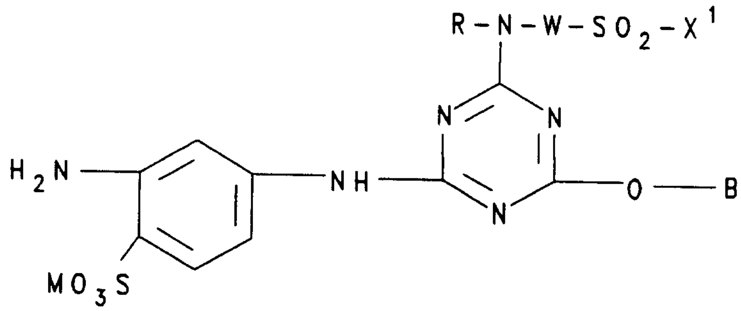

(4)

in welcher M, B, R, W und $X^1$ die obengenannten Bedeutungen haben, kuppelt, oder daß man eine Verbindung der allgemeinen Formel (5)

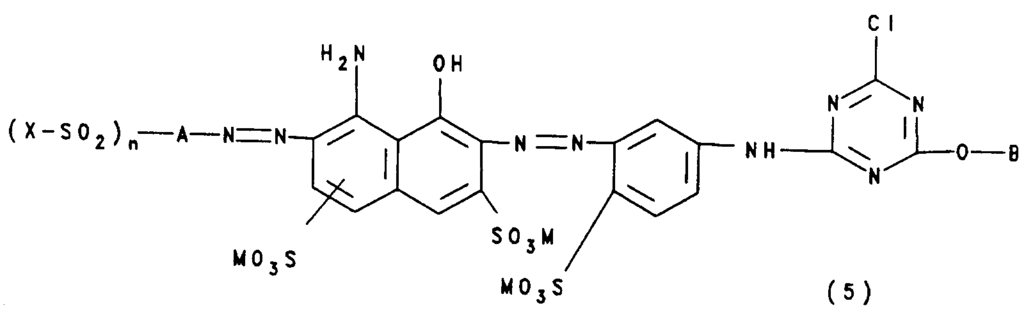

(5)

in welcher X, n, A, M und B eine der obengenannten Bedeutungen haben und die eine Sulfogruppe $-SO_3M$ in 3- oder 4-Stellung an den 1-Amino-8-naphthol-Rest gebunden ist, mit einer Aminoverbindung der allgemeinen Formel (6)

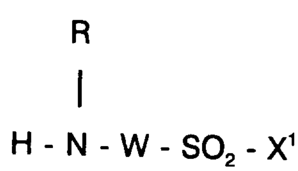

(6)

in welcher R, W und $X^1$ eine der obengenannten Bedeutungen haben, umsetzt.

Die Verbindungen der allgemeinen Formel (3) und deren Ausgangsverbindungen (Diazo- und Kupplungskomponenten) sind in der Literatur zahlreich beschrieben. Die Verbindungen der Formel (5) lassen sich durch Kupplung der Azoverbindung der Formel (3) mit dem Diazoniumsalz einer Aminoverbindung der

Formel (7)

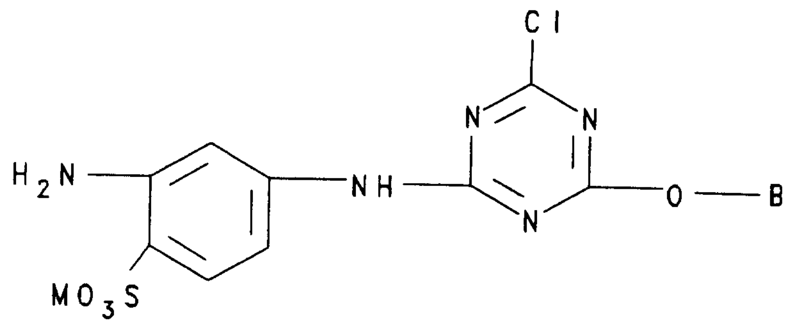

(7)

in welcher M und B die obengenannten Bedeutungen haben, herstellen. Die Herstellung der Diazoniumverbindungen erfolgt nach den üblichen Diazotierungsreaktionen, so bspw. bei -5°C bis +15°C mittels salpetriger Säure bei einem pH-Wert von unterhalb 2,5. Die Kupplungsreaktionen der Diazoniumverbindungen der Amine (4) und (7) mit einer Azoverbindung (3) erfolgen ebenfalls analog bekannten Verfahrensweisen, so bevorzugt in wäßriger Lösung und bei einem pH-Wert zwischen 3 und 8, vorzugsweise zwischen 4 und 7, und bei einer Temperatur zwischen 5 und 30°C, vorzugsweise zwischen 10 und 25°C.

Ebenso wird die Umsetzung der Chlortriazinylamino-Azoverbindung der allgemeinen Formel (5) mit der Aminoverbindung der allgemeinen Formel (6) analog altbekannten Verfahren der Umsetzung eines Chlortriazins mit einer Aminoverbindung durchgeführt, so beispielsweise in wäßrigem oder wäßrigorganischem Medium, bevorzugt in wäßriger Lösung, bei einem PH-Wert zwischen 2 und 9, bevorzugt zwischen 3 und 7, insbesondere bevorzugt zwischen 3 und 4, und bei einer Temperatur zwischen 20 und 90°C, bevorzugt zwischen 70 und 90°C, wobei hierbei darauf zu achten ist, insbesondere bei der Wahl des pH-Wertes im alkalischen Bereich, daß die faserreaktiven Gruppen $-SO_2-X$ und $-SO_2-X^1$ nicht geschädigt werden. Die Umsetzung sollte deshalb möglichst nicht oberhalb eines pH-Wertes von 7 und bei möglichst niedrigen Temperaturen erfolgen. Sofern die Umsetzung in einem wäßrig-organischen Medium durchgeführt wird, wobei das organische Medium ein gegenüber den Reaktanten inertes und bevorzugt mit Wasser mischbares Lösemittel ist, ist das organische Lösemittel bspw. Toluol oder bevorzugt Aceton oder N-Methylpyrrolidon oder ein N-Alkylacylamid, wie Dimethylformamid.

Die Ausgangsverbindungen der allgemeinen Formel (4) erhält man analog bekannten Verfahrensweisen durch Umsetzung einer 2-Chlor-s-triazin-Verbindung, die in 4-Stellung die Alkoxygruppe und in 6-Stellung die Aminogruppe entsprechend der Aminoverbindung der allgemeinen Formel (3) enthält, mit der 1,3-Diaminobenzol-2-sulfonsäure in wäßrigem oder wäßrig-organischem Medium bei einem pH-Wert zwischen 2 und 8 und einer Temperatur zwischen 20 und 100°C. Diese Monochlor-alkoxy-amino-triazin-Ausgangsverbindung läßt sich wiederum analog bekannten Verfahrensweisen durch Umsetzung des 2,4-Dichlor-6-alkoxy-s-triazins mit einem Amin der allgemeinen Formel (6) herstellen, so beispielsweise in wäßrigem oder wäßrig-organischem Medium bei einem pH-Wert zwischen 3 und 6 und einer Temperatur zwischen 30 und 60°C. Die 2,4-Dichlor-4-alkoxy-s-triazin-Verbindung und deren Herstellung ist aus der russischen Patentschrift Nr. 295 786 bekannt.

Ausgangsdiazokomponenten der allgemeinen Formel $(X-SO_2)_n-A-NH_2$, die zur Herstellung der Ausgangs-Azoverbindungen der Formel (3) dienen und die auf die 1-Amino-8-hydroxynaphthalin-3,6- oder -4,6-disulfonsäure im stark sauren Bereich gekuppelt werden, sind beispielsweise 4-(β-Sulfatoethylsulfonyl)-anilin, 4-Vinylsulfonyl-anilin, 3-(β-Sulfatoethylsulfonyl)-anilin, 2,4-Bis-(β-sulfatoethylsulfonyl)-anilin, 2,5-Bis-(β-sulfatoethylsulfonyl)-anilin, 3,4-Bis-(β-sulfatoethylsulfonyl)-anilin, 3,5-Bis-(β-sulfatoethylsulfonyl)-anilin, 2-Methoxy-5-(β-sulfatoethylsulfonyl)-anilin, 4-Methoxy-3-(β-sulfatoethylsulfonyl)-anilin, 2-Methoxy-4-(β-sulfatoethylsulfonyl)-anilin, 2-Methoxy-5-methyl-4-(β-sulfatoethylsulfonyl)-anilin, 6-(β-Sulfatoethylsulfonyl)-2-amino-naphthalin, 8-(β-Sulfatoethylsulfonyl)-2-amino-naphthalin, 6-Sulfo-8-(β-Sulfatoethylsulfonyl)-2-amino-naphthalin, 8-Sulfo-6-(β-sulfatoethylsulfonyl)-2-amino-naphthalin und 1-Sulfo-6-(β-sulfatoethylsulfonyl)-2-amino-naphthalin.

Aminoverbindungen der allgemeinen Formel $HN(R)-W-SO_2-X^1$ sind beispielsweise 4-(β-Sulfatoethylsulfonyl)-anilin, 3-(β-Sulfatoethylsulfonyl)-anilin, N-Methyl-4-(β-sulfatoethylsulfonyl)-anilin, N-Methyl-3-(β-sulfatoethylsulfonyl)-anilin, N-Methyl-3-vinylsulfonyl-anilin, N-Methyl-4-vinylsulfonyl-anilin, 4-Vinylsulfonyl-anilin, 3-Vinylsulfonyl-anilin, 2-(β-Sulfatoethylsulfonyl)-1-amino-ethan, 2-(β-Chlorethylsulfonyl)-1-amino-ethan, 2-Vinylsulfonyl-1-amino-ethan, 3-Vinylsulfonyl-1-amino-propan, 3-(β-Chlorethylsulfonyl)-1-amino-propan, 3-(β-Sulfatoethylsulfonyl)-1-amino-propan, 4-(β-Sulfatoethylsulfonyl)-1-amino-butan, 4-(β-Chlorethylsulfonyl)-1-amino-butan und 4-Vinylsulfonyl-1-amino-butan.

Die Abscheidung der erfindungsgemäß hergestellten Verbindungen aus den Syntheseansätzen erfolgt nach allgemein bekannten Methoden, so beispielsweise durch Ausfällen aus dem Reaktionsmedium mittels einem Elektrolyt, wie beispielsweise Natriumchlorid und Kaliumchlorid, oder durch Eindampfen oder Sprühtrocknung der Reaktionslösung, wobei der Reaktionslösung eine Puffersubstanz zugefügt werden kann. In diesem Fall kann die Reaktionslösung, sofern sie größere Mengen anorganischer Salze enthält, durch eine geeignete Nachbehandlung, wie bspw. durch Revers-Osmose, von den anorganischen Salzen befreit werden.

Die neuen erfindungsgemäßen Azoverbindungen der allgemeinen Formel (1) - im nachfolgenden Verbindungen (1) genannt - haben faserreaktive Eigenschaften und besitzen sehr gute Farbstoffeigenschaften. Sie können deshalb zum Färben von hydroxy- und/oder carbonamidgruppenhaltigem Material, insbesondere Fasermaterial, wie auch von Leder, verwendet werden. Ebenso können die bei der Synthese der Verbindungen (1) anfallenden Lösungen, gegebenenfalls nach Zusatz einer üblichen Puffersubstanz, die einen pH-Wert zwischen 3 und 7 einzuhalten vermag, und gegebenenfalls nach Konzentrierung der Lösung, direkt als Flüssigpräparation der färberischen Verwendung zugeführt werden.

Gegenstand der vorliegenden Erfindung ist deshalb auch die Verwendung der erfindungsgemäßen Verbindungen (1) zum Färben (einschließlich Bedrucken) von hydroxy- und/oder carbonamidgruppenhaltigen Materialien, insbesondere Fasermaterialien, bzw. Verfahren zu deren Anwendung auf diesen Substraten. Hierbei kann man analog bekannten Verfahrensweisen vorgehen.

Hydroxygrupppenhaltige Materialien sind solche natürlichen oder synthetischen Ursprungs, wie beispielsweise Cellulosefasern oder deren Regeneratprodukte und Polyvinylalkohole oder cellulosehaltige Produkte, wie Papier. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane sowohl in Form der Masse, wie beispielsweise Folien, als auch in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten Substraten nach den für wasserlösliche Farbstoffe, insbesondere faserreaktive Farbstoffe, bekannten Anwendungstechniken applizieren und fixieren, so beispielsweise, indem man die Verbindung (1) in gelöster Form auf das Substrat aufbringt oder sie darin einbringt und sie auf diesem oder in diesem, gegebenenfalls durch Hitzeeinwirkung oder durch Einwirkung eines alkalisch wirkenden Mittels oder durch beide Maßnahmen, fixiert. Solche Färbe- und Fixierweisen sind sowohl in der Fachliteratur als auch in der Patentliteratur zahlreich beschrieben, wie beispielsweise in der Europäischen Patentanmeldungs-Veröffentlichung Nr. 0 218 131.

Die erfindungsgemäßen Verbindungen (1) besitzen eine gute bis sehr gute Löslichkeit in Wasser und eine gute Stabilität in den Druckpasten und Färbebädern. Sie zeichnen sich durch hohe Farbstärke und guten Farbaufbau aus und liefern mit sehr hohen Fixierausbeuten farbstarke, marineblaue Färbungen und Drucke, die sich durch gute Gebrauchs- und Fabrikationsechtheiten, wie beispielsweise Wasch-, Meerwasser-, Wasser-, Chlorbadewasser, Säure-, Alkali-, Überfärbe-, Schweiß-, Abgas-, Bügel-, Plissier-, Dekatier-, Trockenreinigungs- und Reibechtheiten, auszeichnen. Die Lichtechtheiten der erhaltenen Färbungen und Drucke sowohl in trockenem als auch in mit Trinkwasser oder in mit einer sauren oder alkalischen Schweißlösung feuchten Zustand sind sehr gut. Nicht fixierte Farbstoffanteile lassen sich gut auswaschen. Im Druck auf Cellulosefasermaterialien erhält man scharfe Konturen mit einem klaren Weißfond. Drucke und Färbungen flecken in nicht fixiertem Zustand beim Ablegen nicht ab bzw. bluten nicht aus.

Insbesondere eignen sich die erfindungsgemäßen Verbindungen (1) jedoch für den Ätz- und Reservedruck. Ihre Verwendbarkeit in diesen beiden technisch bedeutenden Anwendungsverfahren beruht darauf, daß Färbungen dieser neuen Verbindungen (1) rein weiß ätzbar sind bzw. daß die neuen Verbindungen (1) Cellulosefasermaterial an den Stellen, an denen es mit einem Reservierungsmittel bedruckt oder imprägniert wurde, auch unter den üblichen Fixierbedingungen für faserreaktive Farbstoffe, d. h. in Gegenwart von alkalisch wirkenden Mitteln und höheren Temperaturen nicht anfärben, so daß die erfindungsgemäßen Verbindungen (1) sich problemlos für die Herstellung von Färbungen eignen, deren Negativmuster durch ein Reservierungsmittel vorgegeben ist.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet.

Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

Beispiel 1

Man stellt zunächst als Ausgangsverbindung den Disazofarbstoff der Formel

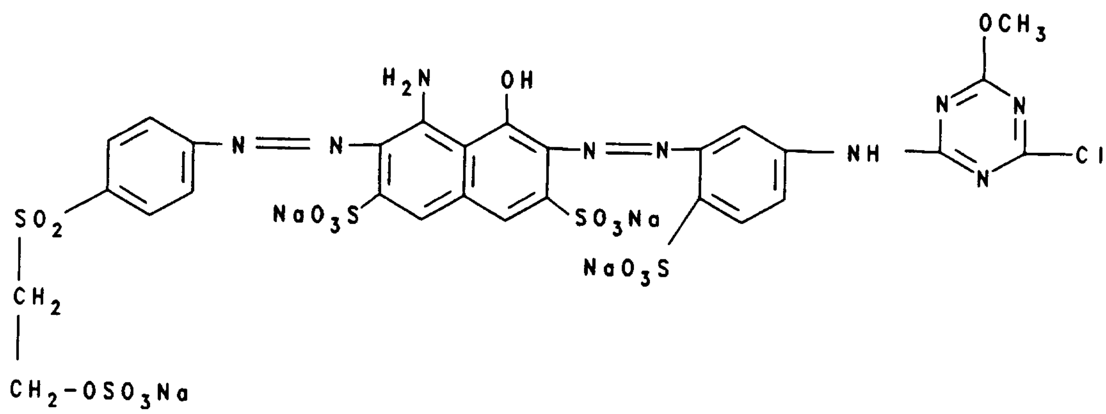

her, indem man zunächst in bekannter Weise 4-($\beta$-Sulfatoethylsulfonyl)-anilin diazotiert und mit 1-Amino-8-naphthol-3,6-disulfonsäure im stark sauren Bereich kuppelt und anschließend die erhaltene Azoverbindung mit einer durch Umsetzung von 1,3-Diamino-6-sulfo-benzol und 2,4-Dichlor-6-methoxy-s-triazin erhaltenen Diazokomponente, nach deren Diazotierung, umsetzt. 95,4 Teile dieses Disazofarbstoffes löst man in 1000 Teilen Wasser, gibt 15 Teile kristallisiertes Natriumacetat und danach 33,7 Teile 3-($\beta$-Sulfatoethylsulfonyl)-anilin hinzu, stellt den Reaktionsansatz auf einen pH-Wert von 4, erwärmt ihn stetig innerhalb von zwei Stunden auf Siedetemperatur unter Einhaltung eines pH-Bereiches von 3,8 bis 4 mittels einer wäßrigen Natriumacetatlösung und führt die Umsetzung bei Siedetemperatur und bei einem pH-Wert von etwa 4 während einer Stunde zu Ende. Die Syntheselösung wird geklärt und die erfindungsgemäße Disazoverbindung der, in Form der freien Säure geschrieben, Formel

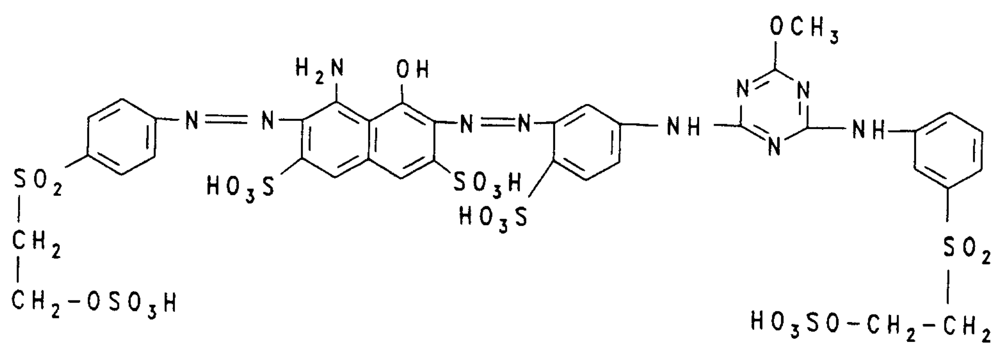

($\lambda_{max}$ = 600 nm)

durch Sprühtrocknung des Filtrates isoliert. Man erhält das Alkalimetallsalz (Natriumsalz) der Disazoverbindung in Form eines elektrolythaltigen blauschwarzen Pulvers.

Die erfindungsgemäße Disazoverbindung zeigt sehr gute faserreaktive Farbstoffeigenschaften und liefert nach den in der Technik bekannten, für faserreaktive Farbstoffe üblichen Färbe- und Druckverfahren auf den in der Beschreibung genannten Materialien, wie insbesondere Cellulosefasermaterialien marineblaue bis nachtblaue Färbungen und Drucke mit sehr guten Fabrikations- und Gebrauchsechtheiten. Färbungen dieses Farbstoffes lassen sich durch Ätzmittel ätzen, wobei an den mit Ätzmittel behandelten Stellen der Färbung rein weiße Muster auftreten. Hingegen lassen sich Färbungen mit dem oben angegebenen bekannten Ausgangs-Disazofarbstoff nicht rein weiß ätzen, was bedeutet, daß der bekanne Farbstoff im Gegensatz zum erfindungsgemäßen Farbstoff nicht als Fond-Farbstoff dienen kann. Darüberhinaus ist der erfindungsgemäße Farbstoff sehr gut im Reservedruck anwendbar.

Beispiel 2

Eine neutrale Lösung von 20,6 Teilen 1-Sulfo-6-($\beta$-sulfatoethylsulfonyl)-2-amino-naphthalin und 42,5 Teilen 3-[2'-Methoxy-4'-(4''-$\beta$-sulfatoethylsulfonyl-phenyl)-amino-s-triazin-6'-yl]-amino-6-sulfo-anilin in 500 Teilen Wasser vermischt man mit 17,5 Teilen einer wäßrigen 40 %igen Natriumnitritlösung und läßt das Gemisch unter Rühren innerhalb einer Stunde in ein Gemisch aus 300 Teilen Eis und 15 Teilen einer 96 %igen Schwefelsäure einlaufen. Nach Beendigung der Diazotierungsreaktionen wird überschüssige salpetrige Säure in üblicher Weise mit Amidosulfonsäure zerstört. Das Gemisch der beiden Diazoniumverbindungen wird auf einen pH-Wert von 2 gestellt, und man gibt 30,3 Teile 1-Amino-8-naphthol-3,6-disulfonsäure hinzu. Man rührt den Ansatz etwa zehn Stunden bei 5 bis 10 °C und stellt danach einen pH-Wert von 4,5 bis 5,5 ein und führt ohne weitere Kühlung die zweite Kupplungsreaktion zu Ende. Der Ansatz wird anschließend auf 60 °C erwärmt, mittels Kieselgur geklärt, filtriert und eingedampft. Man erhält ein schwarzes elektrolythaltiges (vorwiegend natriumchloridhaltiges) Pulver des Natriumsalzes der Disazoverbindung der Formel

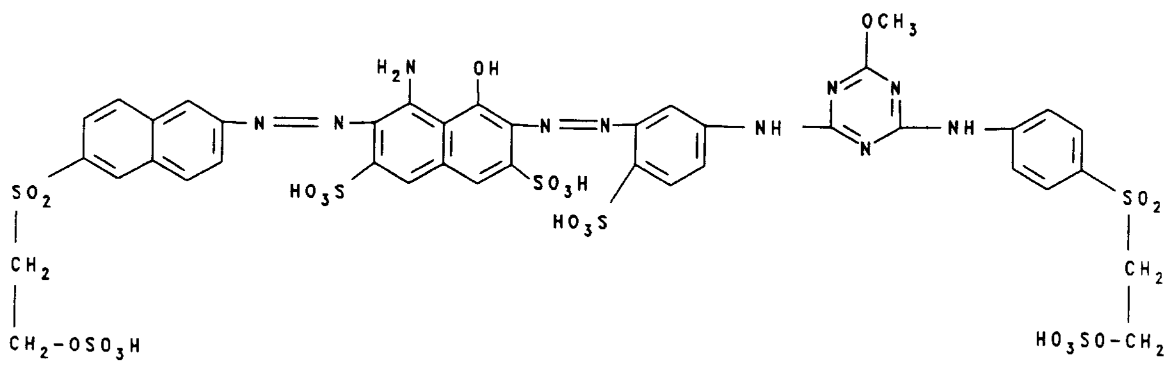

($\lambda_{max}$ = 623 nm).

Sie besitzt sehr gute faserreaktive Farbstoffeigenschaften und liefert beispielsweise auf Cellulosefasermaterialien grünstichig marineblaue Drucke und Färbungen mit sehr guten Echtheitseigenschaften in hoher Farbausbeute und ist sehr gut im Ätzdruck einsetzbar, wobei auf den Färbungen des Farbstoffes mit den üblichen Ätzmitteln rein weiße Muster erzeugt werden.

Beispiel 3

Eine Mischung aus 8,8 Teilen einer 40 %igen wäßrigen Natriumnitritlösung und einer Lösung mit einem pH-Wert von 6 bis 7 von 27,1 Teilen 3-[2'-Methoxy-4'-(4''-$\beta$-sulfatoethylsulfonyl-phenyl)-amino-s-triazin-6'-yl]-amino-6-sulfo-anilin in 200 Teilen Wasser wird langsam in ein Gemisch aus 200 Teilen Eis und 18,3 Teilen einer 30 %igen wäßrigen Salzsäure eingerührt. Man rührt noch 30 Minuten nach und entfernt überschüssige salpetrige Säure mittels Amidosulfonsäure. Die erhaltene Diazoniumsalzsuspension gibt man sodann in eine neutrale Lösung von 28,7 Teilen der Verbindung 2-(4'-$\beta$-Sulfatoethylsulfonyl-phenyl)-azo-1-amino-8-naphthol-3,6-disulfonsäure in 200 Teilen Wasser, stellt mittels Natriumcarbonat einen pH-Wert von 5 bis 5,5 ein und führt die Kupplungsreaktion zu Ende. Der Ansatz wird bei 60 °C geklärt und das Filtrat sprühgetrocknet.

Man erhält das Alkalimetallsalz (Natriumsalz) der Disazoverbindung der Formel

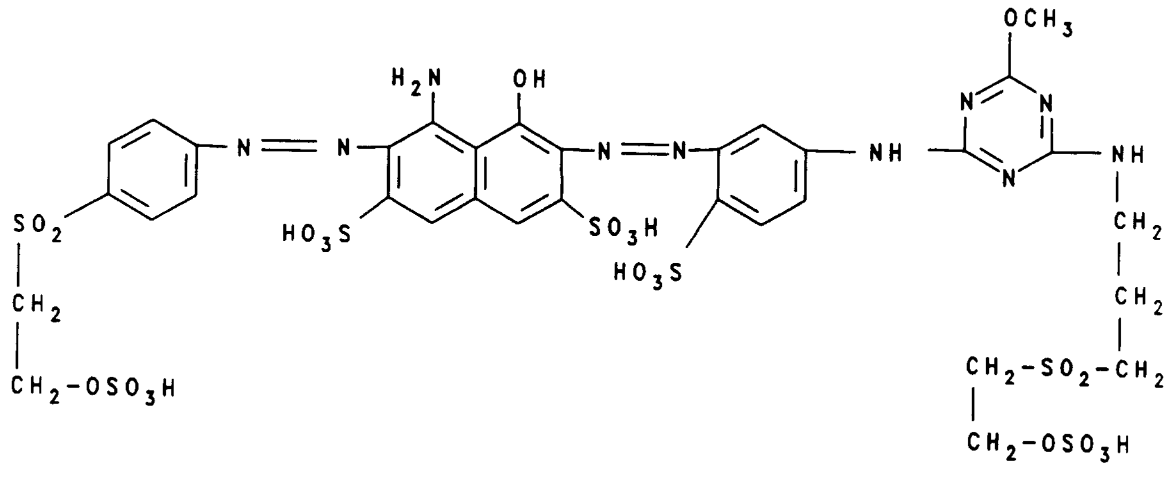

($\lambda_{max}$ = 602 nm)

in Form eines elektrolythaltigen (vorwiegend natriumchloridhaltigen) schwarzen Pulvers. Sie zeigt sehr gute Farbstoffeigenschaften und kann als faserreaktiver Farbstoff gemäß den üblichen Applikations- und Fixierverfahren in den üblichen Färbe- und Druckverfahren zum Färben von Fasermaterialien, wie beispielsweise Cellulosefasermaterialien, insbesondere auch im Ätz- und Reservedruck, eingesetzt werden. Sie liefert farbstarke, naßechte marineblaue Färbungen und Drucke, die rein weiß ätzbar sind.

Beispiele 4 bis 42

In den nachfolgenden Tabellenbeispielen sind weitere erfindungsgemäße Verbindungen entsprechend der allgemeinen Formel (1) mit Hilfe ihrer Formelkomponenten beschrieben. Sie lassen sich in erfindungsgemäßer Weise, beispielsweise nach einem der obigen Ausführungsbeispiele, mittels ihrer aus dem jeweiligen Tabellenbeispiel in Verbindung mit der Formel (1) ersichtlichen Ausgangsverbindungen herstellen. Sie besitzen faserreaktive Farbstoffeigenschaften und liefern insbesondere auf Cellulosefasermaterialien nach den für faserreaktive Farbstoffe üblichen Applikations- und Fixiermethoden farbstarke, echte Färbungen und Drucke in dem in dem jeweiligen Tabellenbeispiel für Färbungen auf Baumwolle angegebenen Farbton. Sie eignen sich darüber hinaus insbesondere für den Ätz- und Reservedruck.

| Bsp. | Rest $(X\text{-}SO_2)_n$-A- | ...Stellung von $-SO_3M$ im 8-Naphtholrest | Rest -O-B | Rest $-N(R)\text{-}W\text{-}SO_2X^1$ | Farbton |
|---|---|---|---|---|---|
| 4 | 4-(ß-Sulfatoethylsulfonyl)-phenyl | 3- | Methoxy | 4-(ß-Sulfatoethylsulfonyl)-phenylamino | marineblau (600) |
| 5 | dito | 3- | Methoxy | 4-Vinylsulfonyl-phenylamino | marineblau (602) |
| 6 | 4-Vinylsulfonyl-phenyl | 3- | Methoxy | dito | marineblau (600) |
| 7 | dito | 3- | Methoxy | 3-Vinylsulfonyl-phenylamino | marineblau |
| 8 | 4-(ß-Sulfatoethylsulfonyl)-phenyl | 3- | Methoxy | dito | marineblau |
| 9 | dito | 4- | Methoxy | dito | marineblau (580) |
| 10 | dito | 4- | Methoxy | 4-(ß-Sulfatoethylsulfonyl)-phenylamino | marineblau |

| Bsp. | Rest $(X-SO_2)_n$-A- | ...Stellung von $-SO_3M$ im 8-Naphtholrest | Rest -O-B | Rest $-N(R)-W-SO_2X^1$ | Farbton |
|---|---|---|---|---|---|
| 11 | 4-(ß-Sulfatoethylsulfonyl)-phenyl | 3- | Ethoxy | dito | marineblau (605) |
| 12 | dito | 3- | Propoxy | dito | marineblau |
| 13 | 2,5-Dimethoxy-4-(ß-sulfatoethylsulfonyl)-phenyl | 3- | Methoxy | dito | marineblau (631) |
| 14 | dito | 3- | Methoxy | 3-(ß-Sulfatoethylsulfonyl)-phenylamino | marineblau |
| 15 | dito | 3- | Methoxy | 3-(ß-Sulfatoethylsulfonyl)-propylamino | marineblau (623) |
| 16 | 4-(ß-Sulfatoethylsulfonyl)-phenyl | 3- | Methoxy | dito | marineblau |
| 17 | dito | 3- | Ethoxy | dito | marineblau |

| Bsp. | Rest $(X-SO_2)_n$-A- | ...Stellung von $-SO_3M$ im 8-Naphtholrest | Rest -O-B | Rest -N(R)-W-$SO_2X^1$ | Farbton |
|---|---|---|---|---|---|
| 18 | dito | 4- | Methoxy | dito | grünstichig marineblau (570) |
| 19 | 4-(ß-Sulfatoethylsulfonyl)-phenyl | 3- | Methoxy | Di-N,N-[ß-(ß'-chlor-ethylsulfonyl)-ethyl]-amino | marineblau (596) |
| 20 | 1-Sulfo-6-(ß-sulfatoethylsulfonyl)-naphth-2-yl | 3- | Methoxy | dito | marineblau (625) |
| 21 | dito | 3- | Methoxy | 4-(ß-Sulfatoethylsulfonyl)-phenylamino | marineblau (630) |
| 22 | dito | 3- | Methoxy | 4-Vinylsulfonyl-phenylamino | marineblau |
| 23 | dito | 3- | Methoxy | 3-Vinylsulfonyl-phenylamino | marineblau |
| 24 | dito | 3- | Methoxy | 3-(ß-Sulfatoethylsulfonyl)-phenylamino | marineblau |

| Bsp. | Rest $(X-SO_2)_n-A-$ | ...Stellung von $-SO_3M$ im 8-Naphtholrest | Rest -O-B | Rest $-N(R)-W-SO_2X^1$ | Farbton |
|---|---|---|---|---|---|
| 25 | dito | 3- | Methoxy | 3-(β-Sulfatoethylsulfonyl)-propylamino | marineblau |
| 26 | dito | 3- | Methoxy | 3-Vinylsulfonyl-propylamino | marineblau |
| 27 | 2-Methoxy-5-methyl-4-(β-sulfatoethylsulfonyl)-phenyl | 3- | Ethoxy | dito | marineblau (616) |
| 28 | 2-Methoxy-5-methyl-4-(β-sulfatoethylsulfonyl)-phenyl | 3- | Methoxy | 3-(β-Sulfatoethylsulfonyl)-phenylamino | marineblau |
| 29 | 4-(β-Sulfatoethylsulfonyl)-phenyl | 3- | Methoxy | 2-Methoxy-5-(β-sulfatoethylsulfonyl)-phenylamino | marineblau (603) |
| 30 | dito | 3- | Methoxy | 2-Methoxy-5-vinylsulfonyl-phenylamino | marineblau |
| 31 | dito | 3- | Methoxy | N-Methyl-3-(β-sulfatoethylsulfonyl)-phenylamino | marineblau |

| Bsp. | Rest $(X-SO_2)_n$-A- | ...Stellung von $-SO_3M$ im 8-Naphtholrest | Rest -O-B | Rest $-N(R)-W-SO_2X^1$ | Farbton |
|---|---|---|---|---|---|
| 32 | dito | 3- | Methoxy | N-Methyl-4-(ß-sulfatoethylsulfonyl)-phenylamino | marineblau |
| 33 | 4-(ß-Sulfatoethylsulfonyl)-phenyl | 3- | Methoxy | N-Methyl-3-(vinylsulfonyl)-phenylamino | marineblau (610) |
| 34 | 4-(ß-Sulfatoethylsulfonyl)-phenyl | 3- | Methoxy | N-Methyl-4-(vinylsulfonyl)-phenylamino | marineblau |
| 35 | dito | 3- | Methoxy | 2-(ß-Sulfatoethylsulfonyl)-ethylamino | marineblau (595) |
| 36 | 2,4-Bis-(ß-sulfatoethylsulfonyl)-phenyl | 3- | Methoxy | 3-(ß-Sulfatoethylsulfonyl)-phenylamino | marineblau |
| 37 | dito | 3- | Methoxy | 3-Vinylsulfonyl-phenylamino | marineblau |
| 38 | dito | 3- | Methoxy | 4-Vinylsulfonyl-phenylamino | marineblau |

| Bsp. | Rest $(X\text{-}SO_2)_n$-A- | ...Stellung von $-SO_3M$ im 8-Naphtholrest | Rest -O-B | Rest -N(R)-W-$SO_2X^1$ | Farbton |
|---|---|---|---|---|---|
| 39 | dito | 3- | Methoxy | 4-(β-Sulfatoethylsulfonyl)-phenylamino | marineblau |
| 40 | dito | 3- | Methoxy | 2-(β-Sulfatoethylsulfonyl)-ethylamino | marineblau |
| 41 | 3,5-Bis-(β-sulfatoethylsulfonyl)-phenyl | 3- | Methoxy | 3-(β-Chlorethylsulfonyl)-propylamino | marineblau |
| 42 | dito | 3- | Methoxy | 3-(β-Sulfatoethylsulfonyl)-phenylamino | marineblau |

## Patentansprüche

**1.** Disazoverbindung entsprechend der allgemeinen Formel (1)

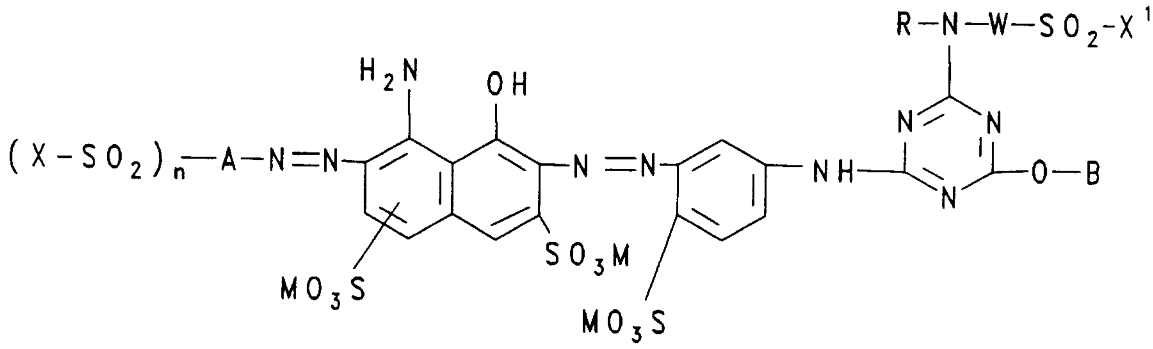

(1)

in welcher bedeuten:

- A ist Phenylen, das durch 1 oder 2 Substituenten substituiert sein kann, oder ist ein Naphthylen, das durch ein Sulfo substituiert sein kann;
- X ist Vinyl oder ist Ethyl, das in $\beta$-Stellung durch einen Substituenten substituiert ist, der durch Alkali unter Bildung der Vinylgruppe eliminierbar ist;
- n ist die Zahl 1 oder 2, bevorzugt 1;
- M ist Wasserstoff oder ein Alkalimetall;
- R ist Wasserstoff oder Alkyl von 1 bis 4 C-Atomen, bevorzugt Wasserstoff;
- W ist Phenylen oder Alkylen von 2 bis 4 C-Atomen;
- $X^1$ ist Vinyl oder ist Ethyl, das in $\beta$-Stellung durch einen Substituenten substituiert ist, der durch Alkali unter Bildung der Vinylgruppe eliminierbar ist;
- B ist Alkyl von 1 bis 4 C-Atomen.

**2.** Verbindung nach Anspruch 1, dadurch gekennzeichnet, daß A ein Rest der allgemeinen Formel (2a) oder (2b)

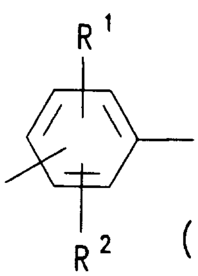

(2a)

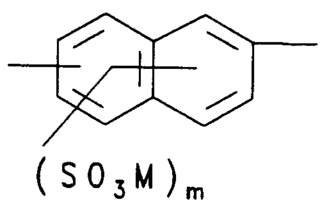

(2b)

ist, in welchen

- $R^1$ Wasserstoff, Alkyl von 1 bis 4 C-Atomen, Alkoxy von 1 bis 4 C-Atomen, Carboxy, Chlor oder Sulfo ist,
- $R^2$ Wasserstoff, Alkyl von 1 bis 4 C-Atomen, Alkoxy von 1 bis 4 C-Atomen oder Chlor ist und
- m für die Zahl Null oder 1 steht (wobei im Falle von m gleich Null diese Gruppierung ein Wasserstoffatom bedeutet).

**3.** Verbindung nach Anspruch 2, dadurch gekennzeichnet, daß A ein meta- oder para-Phenylenrest der Formel (2a) ist, in welcher $R^1$ Wasserstoff oder Methoxy und $R^2$ Wasserstoff oder Methoxy bedeuten.

**4.** Verbindung nach mindestens einem der Ansprüche 1 bis 3, dadurch gekennzeichnet, daß X $\beta$-Sulfatoethyl ist.

**5.** Verbindung nach mindestens einem der Ansprüche 1 bis 4, dadurch gekennzeichnet, daß $X^1$ Vinyl, $\beta$-Chlorethyl oder $\beta$-Sulfatoethyl ist.

6. Verbindung nach mindestens einem der Ansprüche 1 bis 5, dadurch gekennzeichnet, daß B Methyl ist.

7. Verbindung nach mindestens einem der Ansprüche 1 bis 6, dadurch gekennzeichnet, daß W 1,3-Phenylen, 1,4-Phenylen, 1,2-Ethylen oder 1,3-Propylen ist.

8. Verfahren zur Herstellung einer Disazoverbindung von Anspruch 1, dadurch gekennzeichnet, daß man eine Verbindung der allgemeinen Formel (3)

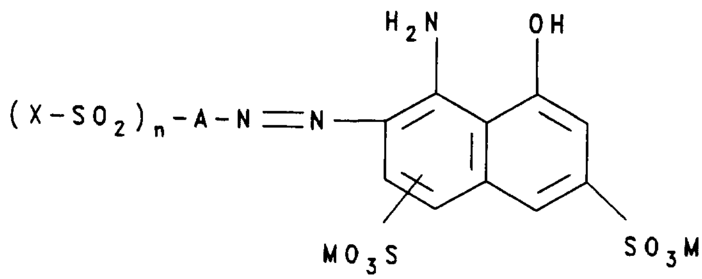

(3)

in welcher M, X, n und A eine der in Anspruch 1 genannten Bedeutungen haben und die eine Gruppe $-SO_3M$ in meta- oder para-Stellung zur Aminogruppe an den Naphthalinrest gebunden ist, mit einer Diazoniumsalzverbindung einer aromatischen Aminoverbindung der allgemeinen Formel (4)

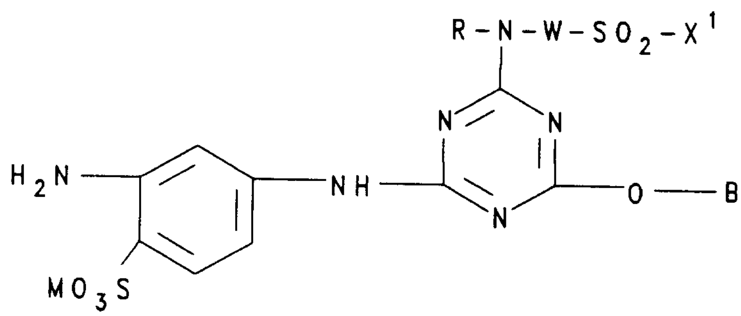

(4)

in welcher M, B, R, W und $X^1$ die in Anspruch 1 genannten Bedeutungen haben, kuppelt, oder daß man eine Verbindung der allgemeinen Formel (5)

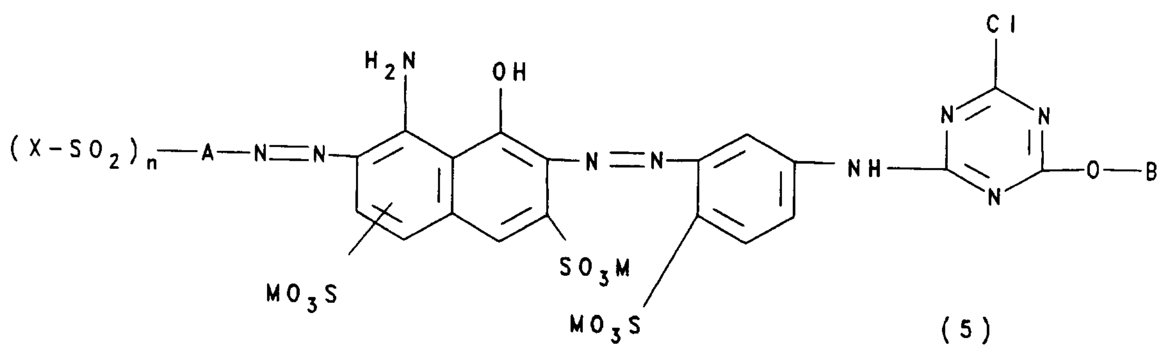

(5)

in welcher X, n, A, M und B eine der in Anspruch 1 genannten Bedeutungen haben und die eine Sulfogruppe $-SO_3M$ in 3- oder 4-Stellung an den 1-Amino-8-naphthol-Rest gebunden ist, mit einer Aminoverbindung der allgemeinen Formel (6)

$$\begin{array}{l} \quad\;\; R \\ \quad\;\; | \\ H - N - W - SO_2 - X^1 \end{array} \qquad (6)$$

in welcher R, W und $X^1$ eine der in Anspruch 1 obengenannten Bedeutungen haben, umsetzt.

**9.** Verwendung einer Disazoverbindung von Anspruch 1 zum Färben (einschließlich Bedrucken) von hydroxy- und/oder carbonamidgruppenhaltigem Material, insbesondere Fasermaterial.

**10.** Verfahren zum Färben (einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff mittels Wärme oder mit Hilfe eines alkalisch wirkenden Mittels oder durch beide Maßnahmen auf bzw. in dem Material fixiert, dadurch gekennzeichnet, daß der Farbstoff eine Disazoverbindung von Anspruch 1 ist.

**Patentansprüche für folgenden Vertragsstaat : ES**

**1.** Verfahren zur Herstellung einer Disazoverbindung entsprechend der allgemeinen Formel (1)

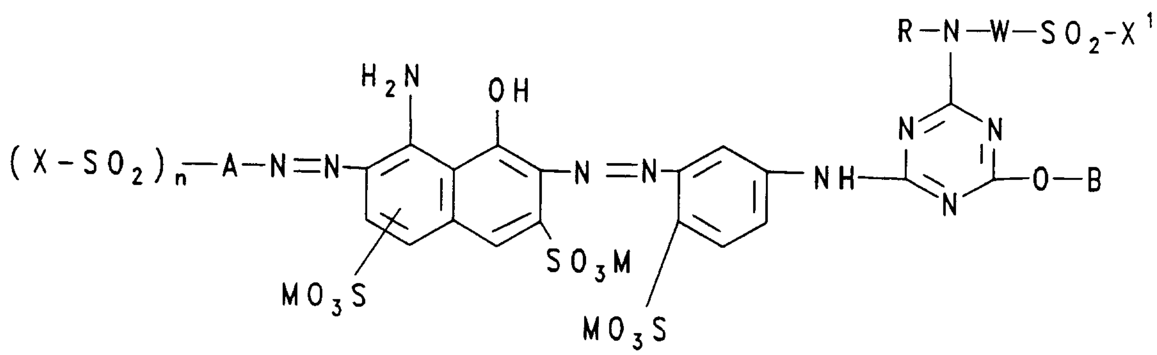

(1)

in welcher bedeuten:

- A ist Phenylen, das durch 1 oder 2 Substituenten substituiert sein kann, oder ist ein Naphthylen, das durch ein Sulfo substituiert sein kann;
- X ist Vinyl oder ist Ethyl, das in $\beta$-Stellung durch einen Substituenten substituiert ist, der durch Alkali unter Bildung der Vinylgruppe eliminierbar ist;
- n ist die Zahl 1 oder 2, bevorzugt 1;
- M ist Wasserstoff oder ein Alkalimetall;
- R ist Wasserstoff oder Alkyl von 1 bis 4 C-Atomen, bevorzugt Wasserstoff;
- W ist Phenylen oder Alkylen von 2 bis 4 C-Atomen;
- $X^1$ ist Vinyl oder ist Ethyl, das in $\beta$-Stellung durch einen Substituenten substituiert ist, der durch Alkali unter Bildung der Vinylgruppe eliminierbar ist;
- B ist Alkyl von 1 bis 4 C-Atomen;

dadurch gekennzeichnet, daß man eine Verbindung der allgemeinen Formel (3)

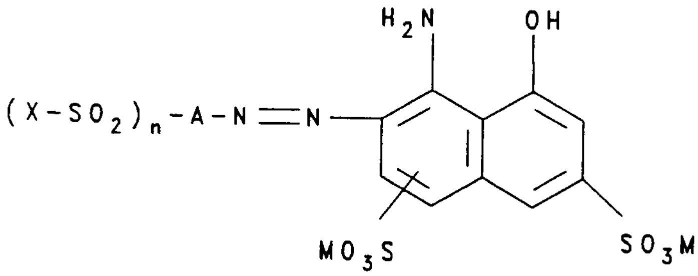

(3)

in welcher M, X, n und A eine der obengenannten Bedeutungen haben und die eine Gruppe $-SO_3M$ in meta- oder para-Stellung zur Aminogruppe an den Naphthalinrest gebunden ist, mit einer Diazoniumsalzverbindung einer aromatischen Aminoverbindung der allgemeinen Formel (4)

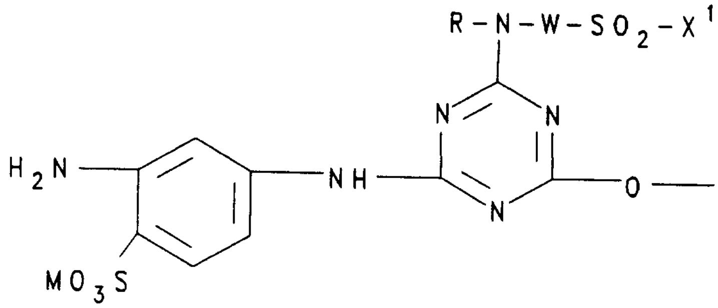

(4)

in welcher M, B, R, W und $X^1$ die obengenannten Bedeutungen haben, kuppelt,
oder daß man eine Verbindung der allgemeinen Formel (5)

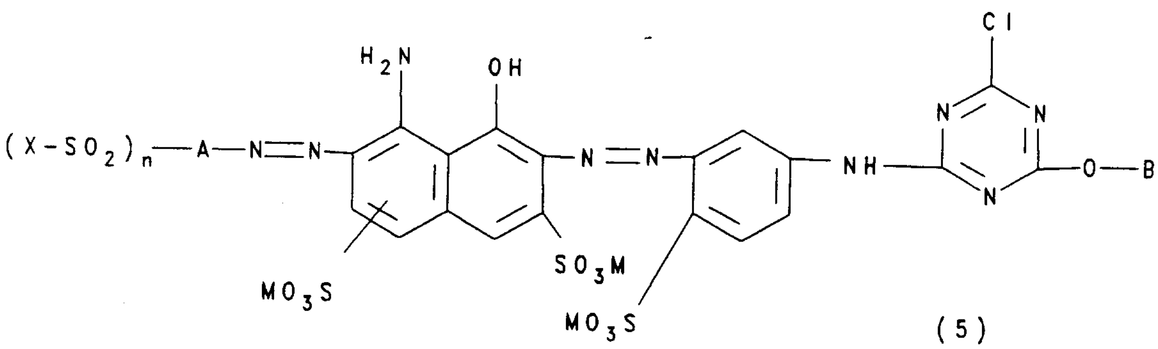

(5)

in welcher X, n, A, M und B eine der obengenannten Bedeutungen haben und die eine Sulfogruppe $-SO_3M$ in 3- oder 4-Stellung an den 1-Amino-8-naphthol-Rest gebunden ist, mit einer Aminoverbindung der allgemeinen Formel (6)

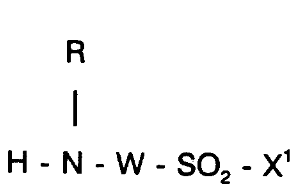

(6)

in welcher R, W und $X^1$ eine der obengenannten Bedeutungen haben, umsetzt.

2. Verfahren nach Anspruch 1, dadurch gekennzeichnet, daß A ein Rest der allgemeinen Formel (2a) oder (2b)

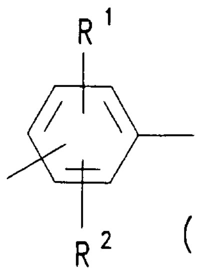 (2a) 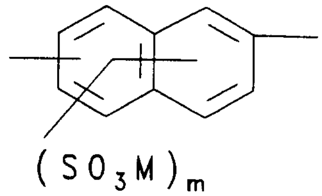 (2b)

ist, in welchen

- $R^1$ Wasserstoff, Alkyl von 1 bis 4 C-Atomen, Alkoxy von 1 bis 4 C-Atomen, Carboxy, Chlor oder Sulfo ist,
- $R^2$ Wasserstoff, Alkyl von 1 bis 4 C-Atomen, Alkoxy von 1 bis 4 C-Atomen oder Chlor ist und
- m für die Zahl Null oder 1 steht (wobei im Falle von m gleich Null diese Gruppierung ein Wasserstoffatom bedeutet).

**3.** Verfahren nach Anspruch 2, dadurch gekennzeichnet, daß A ein meta- oder para-Phenylenrest der Formel (2a) ist, in welcher $R^1$ Wasserstoff oder Methoxy und $R^2$ Wasserstoff oder Methoxy bedeuten.

**4.** Verfahren nach mindestens einem der Ansprüche 1 bis 3, dadurch gekennzeichnet, daß X β-Sulfatoethyl ist.

**5.** Verfahren nach mindestens einem der Ansprüche 1 bis 4, dadurch gekennzeichnet, daß $X^1$ Vinyl, β-Chlorethyl oder β-Sulfatoethyl ist.

**6.** Verfahren nach mindestens einem der Ansprüche 1 bis 5, dadurch gekennzeichnet, daß B Methyl ist.

**7.** Verfahren nach mindestens einem der Ansprüche 1 bis 6, dadurch gekennzeichnet, daß W 1,3-Phenylen, 1,4-Phenylen, 1,2-Ethylen oder 1,3-Propylen ist.

**8.** Verfahren zum Färben (einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff mittels Wärme oder mit Hilfe eines alkalisch wirkenden Mittels oder durch beide Maßnahmen auf bzw. in dem Material fixiert, dadurch gekennzeichnet, daß der Farbstoff eine Disazoverbindung von Anspruch 1 oder eine nach Anspruch 1 hergestellte Disazoverbindung ist.

Europäisches Patentamt

# EUROPÄISCHER RECHERCHENBERICHT

Nummer der Anmeldung

EP 92 11 6757

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 400 648 (SUMITOMO CHEMICAL COMPANY, LTD.)<br>* Seite 9, Zeile 48 - Zeile 49; Ansprüche 1-5,14,15,17-20; Beispiele 3-5 *<br>--- | 1-10 | C09B62/513 |
| A | EP-A-0 374 758 (HOECHST AG.)<br>* Formel 10 *<br>* Seite 3, Zeile 32; Ansprüche *<br>--- | 1-10 | |
| A | CHEMICAL ABSTRACTS, vol. 113, no. 14, 1. Oktober 1990, Columbus, Ohio, US; abstract no. 117063r,<br>K.KURIO ET AL. 'disazo dyes for dyeing and printing'<br>Seite 92 ;<br>* Zusammenfassung *<br>& JP-A-02 105 868 (SUMITOMO CHEMICAL COMPANY, LTD.)<br>----- | 1-10 | |

| RECHERCHIERTE SACHGEBIETE (Int. Cl.5 ) |
|---|
| C09B |

Der vorliegende Recherchenbericht wurde für alle Patentansprüche erstellt

| Recherchenort | Abschlußdatum der Recherche | Prüfer |
|---|---|---|
| DEN HAAG | 18 JANUAR 1993 | GINOUX C.R. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)